# EUROPEAN PATENT SPECIFICATION

(11) **EP 4 610 634 B1**
(45) Date of publication and mention of the grant of the patent: **09.12.2026**
(21) Application number: 25159021.2
(22) Date of filing: 20.02.2025
(51) Int. Cl.: G01N 21/88, G01N 21/95

(54) **MEASURING APPARATUS AND MEASURING METHOD USING THE MEASURING APPARATUS**
MESSVORRICHTUNG UND MESSVERFAHREN UNTER VERWENDUNG DER MESSVORRICHTUNG
APPAREIL DE MESURE ET PROCÉDÉ DE MESURE UTILISANT CET APPAREIL

(30) Priority: 28.02.2024 JP 2024028129
(43) Date of publication of application: 03.09.2025
(73) Proprietor: Ricoh Company, Ltd., Tokyo 143-8555 (JP)
(72) Inventor: MASUDA, Koji, Tokyo, 143-8555 (JP); HIRAKAWA, Makoto, Tokyo, 143-8555 (JP); KUMAGAI, Masaru, Tokyo, 143-8555 (JP)
(74) Representative: SSM Sandmair

(56) References cited:
- WO-A1-2021/255191
- JP-A- 2000 028 535
- JP-B2- 4 823 913

## Description

### BACKGROUND

### Technical Field

The present disclosure relates to a measuring apparatus and a measuring method using the measuring apparatus.

### Related Art

An inspection device that inspects a car paint surface for defects is known. For example, an inspection device utilizing a three-dimensional shape measurement method is disclosed, in which pattern light, created by combining multiple sinusoidal slit pattern data with different frequency and color components, is projected onto an object to capture images.

JP 2000 028535 A relates to a defect inspection apparatus for inspecting a defect on a surface of a test object, and an illumination apparatus for the defect inspection.

WO 2021/255191 A1 discloses an inspection tunnel for illuminating an outer surface of an object to be inspected.

JP 4 823 913 B2 provides a device for inspecting an object having a substantially spherical surface.

When illuminating a measured object with light containing multiple colors from multiple linear light sources in an array direction, and detecting the light secularly reflected from the illuminated object to inspect defects on the painted surface, it is difficult to maintain uniformity in the illumination pattern at both ends of the linear light sources in the array direction.

Thus, measurement variations occur, making it difficult to achieve highly accurate measurements of the object.

To deal with such difficulties, it is an object of the present disclosure is to provide a measuring apparatus that enables highly accurate measurement.

### SUMMARY

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

According to one or more aspects of the present disclosure, highly accurate measurement can be achieved.

Further scope of applicability of the present invention will become apparent from the detailed description given hereinafter. However, the detailed description and specific examples, while indicating preferred embodiments of the invention, are given by illustration only, since various changes and modifications within the scope of the invention as defined by the appended claims will become apparent to those skilled in the art from this detailed description.

### BRIEF DESCRIPTION OF THE DRAWINGS

A more complete appreciation of one or more embodiments of the present disclosure and many of the attendant advantages and features thereof can be readily obtained and understood from the following detailed description with reference to the accompanying drawings, wherein:
FIG. 1 is a diagram of a measuring apparatus;
FIG. 2 is a diagram of an optical section included in the measurement apparatus in FIG. 1;
FIGS. 3A and 3B are diagrams each illustrating the relation between the optical section of the measuring apparatus in FIG. 1 and an object to be measured;
FIGS. 4A, 4B, and 4C are diagrams each illustrating an optical arrangement in the measuring apparatus in FIG. 1;
FIG. 5 is a diagram of another arrangement of point light sources in a measuring apparatus;
FIGS. 6A, 6B, 6C, and 6D are diagrams for describing an illumination pattern formed on a second diffuser plate in a measuring apparatus;
FIGS. 7A, 7B, 7C, and 7D are diagrams for describing a width of an opening located at the side of a second diffuser plate that is closer to an object;
FIGS. 8A and 8B are diagrams for describing a width of an opening located at the side of a second diffuser plate that is closer to an object;
FIG. 9 is a block diagram of a hardware configuration of a controller of a measuring apparatus;
FIG. 10 is a block diagram of a functional configuration of a controller of a measuring apparatus;
FIG. 11 is a flowchart for explaining a measuring method; and
FIG. 12 is a flowchart of a process for detecting defects performed by a defect detection unit of an information processing apparatus.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments for implementing the disclosure are described below referring to the drawings. Like reference signs are applied to identical or corresponding components throughout the drawings and redundant description may be omitted.

### One or More Embodiments

### Configuration of Measuring Apparatus 1

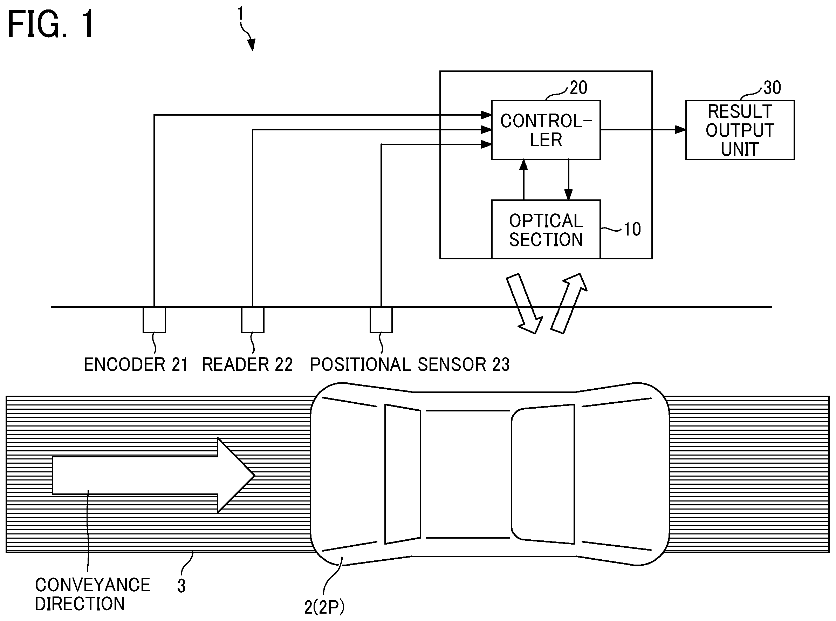

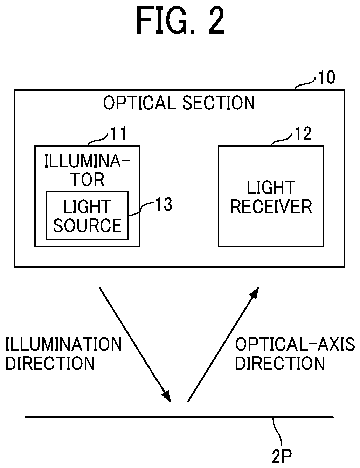

With reference to FIGS. 1 and 2, a configuration of a measuring apparatus 1 is described according to one or more embodiments of the present disclosure. FIG. 1 is a diagram illustrating the configuration of the measuring apparatus 1. The measuring apparatus 1 measures the state of a surface 2P of an object 2 to be measured, which is being conveyed in a conveyance direction. The measuring apparatus 1 may measure the object 2 and represent its state using one or more characteristic values based on the image of the object 2. The object 2 is conveyed by a conveyor 3. The object 2 is, for example, a painted vehicle body, such as a large vehicle, a passenger car, or a compact car, but is not limited thereto. The object 2 can be any painted object, and the measuring apparatus measures the object 2 and the one or more characteristics values based on a captured image (e.g., by a camera) of the object 2. The vehicle body is, for example, the surface 2P of the vehicle body, and the surface 2P of the vehicle body may be painted. The object 2 may be an object other than a vehicle body, and the surface 2P of the object 2 may not be coated.

The measuring apparatus 1 includes at least an optical section 10. The optical section 10 will be described in detail with reference to FIG. 2. FIG. 2 is a diagram of the optical section 10 according to one or more embodiments of the present disclosure. The optical section 10 includes an illuminator 11 and a light receiver 12. A component including the illuminator 11 and the light receiver 12 is referred to as the optical section 10.

The optical section 10 illuminates the object 2 and receives light specularly reflected from the illuminated object 2. The surface 2P can form a gentle curved shape (i.e., a curved shape with a large radius of curvature), however, the present application is not limited thereto). Thus, the surface 2P is described as an imaginary plane parallel to the conveyance direction.

The illuminator 11 illuminates the object 2. The light receiver 12 receives light specularly reflected from the object 2, which is illuminated by the illuminator 11. Examples of the light receiver 12 include an image-capturing device, such as a camera including an imaging element, as a charge coupled device (CCD), a complementary metal-oxide-semiconductor (CMOS), a quantum dot sensor, an organic image sensor, etc., but is not limited thereto.

The light receiver 12 receives light specularly reflected from the object 2, which is illuminated by the illuminator 11. In one or more embodiments, the light receiver 12 may focus on the object 2 and receive light reflected from the object 2 at predetermined time intervals or in response to an external trigger signal from the outside, for measurement. The illuminator 11 includes a light source 13. The illumination direction from the light source 13 and the optical-axis direction of the light receiver 12 are arranged so that the light is specularly reflected off the surface 2P.

A region to be measured by the measuring apparatus 1 is predefined on the object 2. However, the entire object 2 does not have to be within the measurement region. For example, when the object 2 is a vehicle body, regions with large curved surfaces, such as around a door knob or near the edges of the vehicle body, are typically excluded from the measurement region. The illuminator 11 and the light receiver 12 may be arranged according to a measurable region that has been predefined as the measurement region.

When the light receiver 12 is an imaging device, the image information of the object 2 is generated. The image information may be, for example, a two-dimensional color image. The light receiver 12 may be a visible light camera, such as an area camera.

The surface 2P of the object 2 may be a smooth, glossy surface. The light incident on the surface 2P from the illuminator 11 is specularly reflected because the incident angle equals the reflection angle. Further, the surface 2P is a set of multiple of curved surface regions having different normal directions and curvatures.

The measuring apparatus 1 further includes a controller 20, a result output unit 30, an encoder 21, a reader 22, and a position sensor 23. The controller 20 controls, for example, the timing of the operation of the measuring apparatus 1. The encoder 21, the reader 22, and the position sensor 23 are connected to the controller 20. The encoder 21 monitors the conveyance state of the conveyor 3, such as its conveyance speed. The reader 22 acquires information of the object 2, such as its unique identification (ID), vehicle model, and color. The position sensor 23 acquires position information of the object 2, such as its approach to the measurement area or its presence in the measurement area. The controller 20 measures the state of the object 2 based on the specular reflection light from the object 2 received by the light receiver 12, and detects any defect of the surface of the object 2.

The result output unit 30 outputs information on the characteristic values and defects at the respective measurement positions of the object 2 in formats, such as a monitor display, printed documents, or electronic data.

The measuring apparatus 1 provides information useful for identifying the cause of the defect in the preceding process and for repairing the defect in the subsequent process, based on the determined defect type.

When the object 2 is a painted vehicle body, the measuring apparatus 1 measures the presence of defects in painted surfaces 2P of parts, such as the door, bonnet, roof, trunk lid, or rear bumper of the vehicle body. The defects in the painted surfaces 2P refer to scratches, cracks, unevenness, dirt, or discoloration on the coated surface, etc. The coating defects include dust particles, fisheyes, pinholes, and orange peel, etc.

In FIG. 1, the measuring apparatus 1 is placed only on one side of the conveyor 3, but is not limited thereto, and the measurement apparatus 1 can be placed on multiple sides of the conveyor 3. In some embodiments, the measuring apparatus 1 is placed on each side of the conveyor 3. When the measuring apparatus 1 is placed on each side of the transport unit 3, the object 2 may be placed between the measuring apparatuses 1. Alternatively, the measuring apparatuses 1 may be arranged offset from each other in the conveyance direction, with the object 2 positioned between the measuring apparatuses 1.

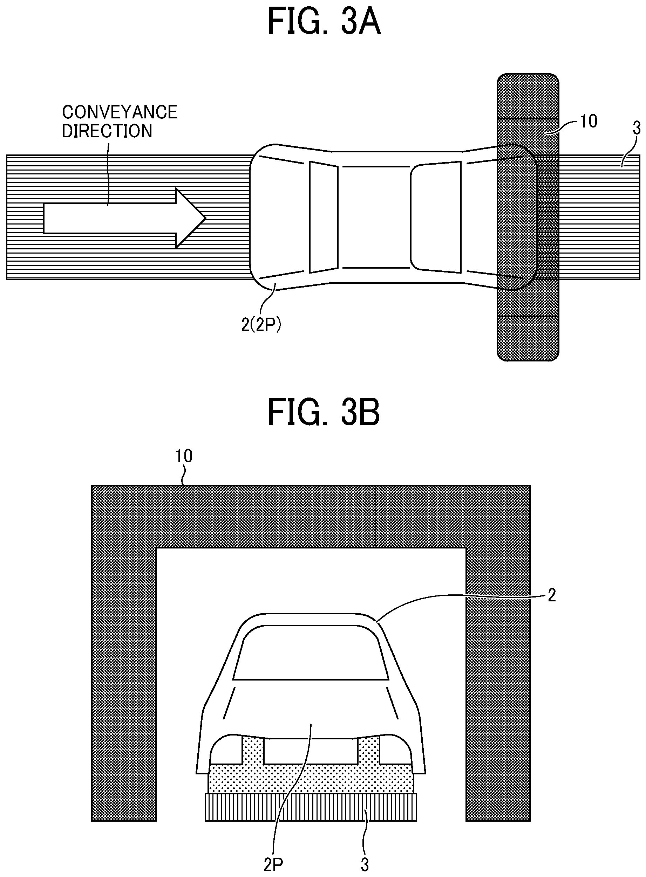

FIGS. 3A and 3B are diagrams each illustrating the relation between an optical section 10 of the measuring apparatus 1 in FIG. 1 and the object 2 to be measured. FIG. 3A is a plan view of the optical section 10 and the object 2, and FIG. 3B is a front view of the optical section 10 and the object 2. The object 2 is conveyed in the conveying direction by the conveyor 3. The optical section 10 is arranged in a gate shape (i.e., U-shape) to surround the conveyed object 2 (i.e., to surround the conveyed object 2 on multiple sides, including completely surrounding the object 2 along a transverse plane perpendicular to the conveying direction). The object 2 is conveyed at a constant speed through the gate-shaped optical section 10 for measurement, but is not limited thereto, and the object 2 can be conveyed at a varying speed through the optical section 10. When the object 2 passes through the gate-shaped optical section 10, the entire object 2 is measured.

### OPTICAL ARRANGEMENT OF MEASURING APPARATUS

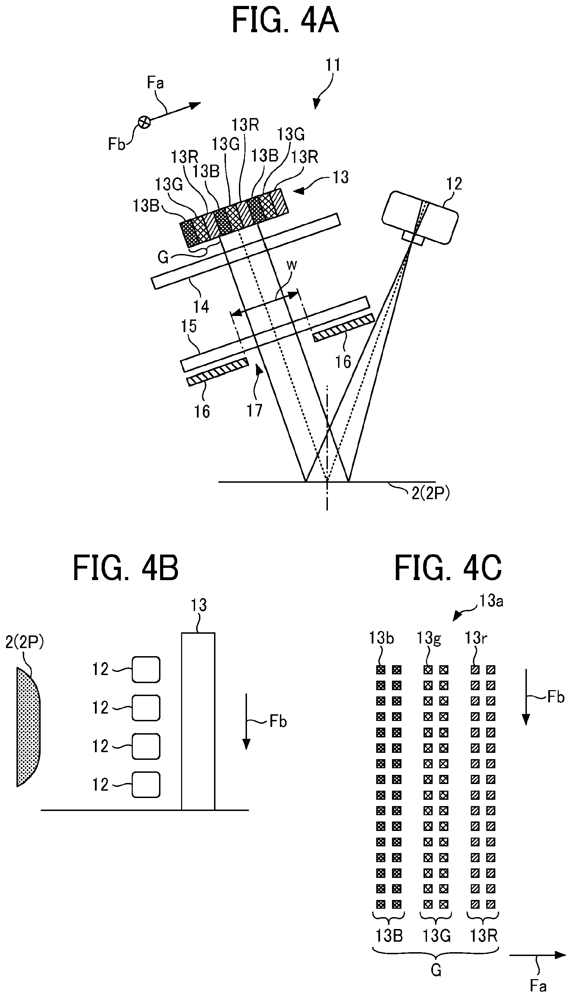

FIGS. 4A, 4B, and 4C are diagrams each illustrating an optical arrangement of the measuring apparatus 1. FIG. 4A is a plan view of the optical arrangement. FIG. 4B is a front view of the optical arrangement. FIG. 4C is a detailed diagram of a light source 13. In FIGS. 4A, 4B, and 4C, the array direction Fa and the orthogonal direction Fb are illustrated. The array direction Fa indicates the array direction in which linear light sources 13B, 13G, and 13R are arranged. The orthogonal direction Fb is orthogonal to the array direction Fa. In FIG. 4A, w represents the width of an opening 17. Like reference signs are applied to components identical or corresponding to components described above, and redundant description is omitted.

As illustrated in FIG. 4A, the measuring apparatus 1 includes an illuminator 11 and a light receiver 12. The illuminator 11 includes a light source 13, a first diffuser plate 14, a second diffuser plate 15, and a light shield portion 16. The first diffuser plate 14 can be spaced from and downstream of the light source 13, the second diffuser plate 15 can be spaced from and downstream of the first diffuser plate 14, and the light shield portion 16 can be spaced from and downstream of the second diffuser plate 15. The light shield portion 16 can include multiple separate light shield portions 16, or can include a single light shield portion 16 with an opening/hole 17. The light sources 13 include multiple light sources 13B, 13G, and 13R. The light sources 13B, 13G, and 13R emit light beams having different wavelengths. For example, the light sources 13B, 13G, and 13R may emit blue light, green light, and red light, respectively. The light sources 13B, 13G, and 13R are arranged along the array direction Fa. The array direction Fa has a predetermined angle with respect to the horizontal direction of the surface of the vehicle body.

FIG. 4B presents the light receiver 12 and the light source 13 positioned relative to the surface 2P of the object 2 to be measured. The light source 13 has directivity that is elongated in the orthogonal direction Fb. Multiple light receivers 12 are arranged in the orthogonal direction Fb.

The light sources 13 includes point light sources 13a that emit light beams having the same wavelengths are arranged in the orthogonal direction Fb. In this arrangement, linear light sources 13a that emit light with different wavelengths may be arranged in the array direction Fa in a certain order (e.g., predetermined order). The predetermined value is a value set by the user in advance.

As illustrated in FIG. 4C, the light sources 13 include light sources 13B, 13G, and 13R. The light source 13B includes multiple point light sources 13b arranged in the orthogonal direction Fb. The light source 13G includes multiple point light sources 13g arranged in the orthogonal direction Fb. The light source 13R includes multiple point light sources 13r arranged in the orthogonal direction Fb. The light source 13 include a red linear light source 13R, a green linear light source 13G, and a blue linear light source 13B. The red linear light source 13R is formed by arranging red point light sources 13r in the array direction Fa in a certain order and in the orthogonal direction Fb.

Similarly, the green linear light source 13G is formed by arranging green point light sources 13g in the array direction Fa in a certain order and in the orthogonal direction Fb. The blue linear light source 13B is formed by arranging blue point light sources 13b in the array direction Fa in a certain order and in the orthogonal direction Fb.

As illustrated in FIGS. 4A, 4B, and 4C, one or more sets G of linear light sources, each containing one red linear light source 13R, one green linear light source 13G, and one blue linear light source 13B arranged in a certain order along the array direction, are provided. In FIGS. 4A, 4B, and 4C, three sets G of linear light sources are arranged. In the following description, the red linear light source 13R, the green linear light source 13G, and the blue linear light source 13B are referred to collectively as a linear light source 13a when not distinguished.

In FIGS. 4A, 4B, and 4C, the linear light sources are arranged in the order of blue, green, and red. However, in some embodiments, the linear light sources may be arranged in a different order, including orders that involve colors other than blue, green, and red.

Red, green, and blue are the minimum required colors for performing phase shift calculations during defect detection and are also the primary colors of visible light, making them versatile and widely applicable.

In FIG. 4C, the blue point light sources 13b, the green point light sources 13g, and the red point light sources 13r are each arranged in two rows in the orthogonal direction Fb. However, the present application is not limited thereto and each of the blue point light sources 13b, the green point light sources 13g, and the red point light sources 13r may be arranged in one row or three or more rows. The blue point light sources 13b, the green point light sources 13g, and the red point light sources 13r are arranged in the orthogonal direction Fb at a pitch of, for example, several millimeters to several tens of millimeters. With such an arrangement, the light sources 13 may be used as light sources including the linear light sources 13a of multiple colors.

The number of blue point light sources 13b, the number of green point light sources 13g, and the number of red point light sources 13r may differ and can be changed according to the emission brightness or the spectral sensitivity of the light receiver 12.

Each of the point light sources 13a may include a lens member that guides the optical path of the emitted light to the object 2. Each lens element is mounted, for example, on a chip of each of the point light sources 13a. The lens elements on the chips reduce the divergence angle of light emitted from the point light sources 13a, enhancing its directivity. Thus, the illumination pattern with high power can be formed on the second diffuser plate 15. In forming a sinusoidal illumination pattern in the array direction Fa and a uniform illumination pattern in the orthogonal direction Fb, the degree of freedom of the divergence angle of light emitted from the point light sources 13a increases.

The point light sources 13a may be light emitting diode (LED) elements, organic electro luminescence (EL) elements, laser elements or any other known light source. To form a further high-luminance illumination pattern on the second diffuser plate 15, an optical element may be additionally attached to the illuminator 11. For example, an optical element may be placed between the point light sources 13a and the first diffuser plate 14, or optical elements may be inserted in other regions.

The first diffuser plate 14 is placed (i.e., positioned) between the light source 13 and the object 2. The second diffuser plate 15 is placed (i.e., positioned) between the first diffuser plate 14 and the object 2. An illumination pattern of light for illuminating the object 2 is formed on the second diffuser plate 15. The formed illumination pattern can be used as a secondary light source for the object 2.

The light source 13, the first diffuser plate 14, and the second diffuser plate 15 are arranged in parallel to each other. In other words, the array direction Fa of the multiple light sources 13B, 13G, and 13R, the first diffuser plate 14, and the second diffuser plate 15 are disposed in parallel to each other. The lengths of the first diffuser plate 14 and the second diffuser plate 15 in the array direction Fa are preferably equal to each other and are preferably larger than the length of the light source 13.

The light shield portion 16 is attached to the surface of the second diffuser plate 15 facing the object 2. The light shield portion 16 may be a black-painted sheet metal or a similar material, but it is not limited to this, and various other light-blocking materials can also be used. The light shield portion 16 includes an opening 17 including the optical axis of light emitted from the light source 13 to the second diffuser plate 15. The light shield portion 16 is attached to restrict the irradiation range of illumination light reaching the object 2 by allowing the illumination light from the light source 13 to pass through only the opening 17.

The illumination pattern formed by the second diffuser plate 15 passes through the opening 17 and illuminates the object 2. This configuration allows the light shield portion 16 to block the uneven regions of the wavy illumination pattern formed at both ends of the illumination light in the array direction Fa. As a result, an illumination pattern of a uniform stripe pattern, combining a sinusoidal variation in light intensity (or luminance of the light emitted from the light source 13) along the specified array direction with alternating bright and dark regions is formed on the object 2.

The light shield portion 16 may be formed integrally with the second diffuser plate 15. In this case, the light shield portion 16 may be formed by coating the second diffuser plate 15 with black ink. The light shield portion 16 may be formed by bonding a member, such as a black-painted sheet metal, to the second diffuser plate 15. In other words, the light shield portion 16 can be integrated with the second diffuser plate 15 by laminating and combining such materials. The light shield portion 16 being integral with the second diffuser plate 15 reduces the number of parts at the time of assembly.

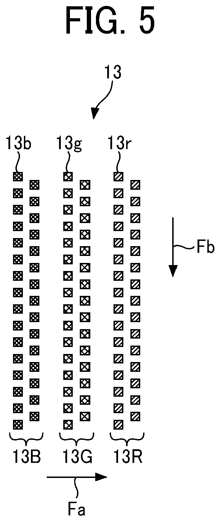

FIG. 5 is a diagram of another arrangement of point light sources 13b, 13g, and 13r in a measuring apparatus 1. In FIG. 5, like reference signs are applied to components identical or corresponding to components illustrated in FIGS. 4A, 4B, and 4C, redundant description is omitted.

In FIG. 5, unlike FIG. 4C, multiple blue point light sources 13b, multiple green point light sources 13g, and multiple red point light sources 13r are arranged in a staggered manner with respect to the orthogonal direction Fb. That is, blue point light sources 13b, green point light sources 13g and red point light sources 13r that are directly adjacent to one another in array direction Fa can be spaced apart from one another in the orthogonal direction Fb.

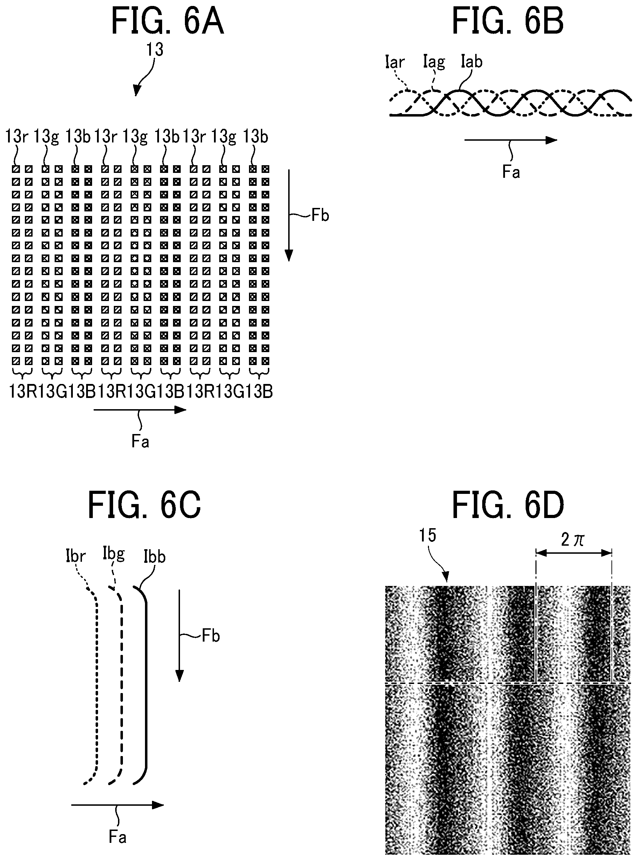

FIGS. 6A, 6B, 6C, and 6D are diagrams for explaining the illumination pattern formed on the second diffuser plate 15 in the measuring apparatus 1. FIG. 6A is a diagram of an arrangement of the light source 13. FIG. 6B illustrates the distribution of luminance in the array direction Fa. FIG. 6C illustrates the distribution of luminance in the orthogonal direction Fb. FIG. 6D illustrates an illumination pattern formed on the second diffuser plate 15. Like reference signs are applied to components identical or corresponding to components described above, and redundant description is omitted.

As illustrated in FIG. 6A, the light source 13 includes linear light sources 13R, linear light sources 13G, and linear light sources 13B, which are arranged in the array direction Fa in the order of the linear light sources 13R, the linear light sources 13G, and the linear light sources 13B. The linear light source 13R includes multiple point light sources 13r, the linear light source 13G includes multiple point light sources 13g, and the linear light source 13B includes multiple point light sources 13b.

FIG. 6B illustrates luminances Iar, Iag, and Iab. The luminance Iar indicates the luminance of the red light of the linear light source 13R, the luminance Iag indicates the green light of the linear light source 13G, and the luminance Iab indicates the blue light of the linear light source 13B in the array direction Fa. To calculate phase information by performing phase shift operations during defect detection, it is preferable that the luminance distribution of each light matches a sinusoidal pattern, although a distribution close to a sinusoidal pattern is also acceptable.

FIG. 6C illustrates luminances Ibr, Ibg, and Ibb. The luminance Ibr indicates the luminance of the red light of the linear light source 13R, the luminance Ibg indicates the green light of the linear light source 13G, and the luminance Ibb indicates the blue light of the linear light source 13B in the orthogonal direction Fb. To use the light sources 13 as multiple linear light sources 13, it is preferable that the luminance distribution of each light is uniform.

FIG. 6D illustrates a luminance distribution for each of red, green, and blue as the illumination pattern formed on the second diffuser plate 15. The sine waves in the array direction Fa, corresponding to red, green, and blue, overlap with a phase shift of 2 π/3 radians therebetween. To accurately calculate phase information using phase shift operations during defect detection, it is preferable that the illumination pattern is a stripe pattern combining light and dark patterns, where the luminance of light (i.e. frequency and/or wavelength) varies sinusoidally in the array direction Fa for each wavelength.

In present disclosure, it is assumed that Ax denotes a diffusion angle in the array direction Fa of the first diffuser plate 14, and Ay denotes a diffusion angle in the orthogonal direction Fb. When multiple point light sources 13a are arranged in the orthogonal direction Fb, increasing the diffusion angle Ay of the first diffuser plate 14 in the orthogonal direction Fb helps to eliminate ripples and achieve uniform brightness or luminance. When multiple point light sources 13a are arranged in the array direction Fa, light emitted from the point light sources 13a is diffused to a degree that prevents uniform luminance, creating a sinusoidal luminance pattern. The diffusion angle Ax of the first diffuser plate 14 in the array direction Fa is preferably smaller than the diffusion angle Ay.

In other words, the diffusion angle Ax in the array direction Fa and the diffusion angle Ay in the orthogonal direction Fb of the first diffuser plate 14 preferably satisfy Ax < Ay.

The distance L1, the distance L2, and the diffusion angle Ax of the first diffuser plate 14 in the array direction Fa are preferably set to achieve such an illumination pattern.

When the distance L1, the distance L2, and the diffusion angle Ax of the first diffuser plate 14 in the array direction Fa are prioritized to create a sinusoidal illumination pattern in the array direction Fa, the illumination pattern in the orthogonal direction Fb may become uneven. To deal with this issue, further increasing the diffusion angle Ay of the first diffuser plate 14 in the orthogonal direction Fb allows the illumination pattern in the orthogonal direction Fb to be brought closer to uniformity.

The first diffuser plate 14 is an anisotropic diffuser in which the diffusion angle Ax in the array direction Fa and the diffusion angle Ay in the orthogonal direction Fb are different from each other, but the second diffuser plate 15 may be isotropic or anisotropic.

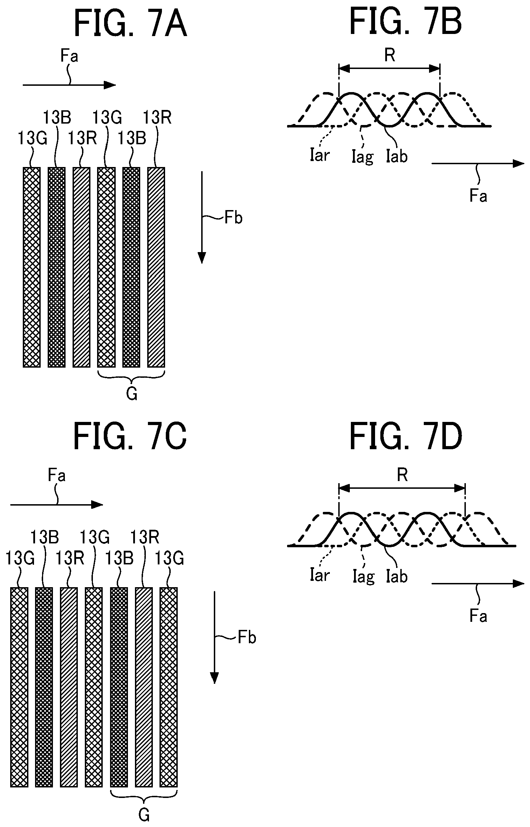

FIGS. 7A, 7B, 7C, and 7D are diagrams each illustrating the width w of an opening 17 (see FIG. 4A) located at the side of the second diffuser plate 15 that is closer to the object 2. FIG. 7B is a diagram of a distribution light in the array direction Fa of FIG. 7A. FIG. 7C is a diagram of the arrangement of a light source including seven linear light sources 13. FIG. 7D is a diagram of a luminance distribution of light in the array direction Fa of FIG. 7C. The arrangement of the colors of the linear light sources 13a illustrated in FIGS. 7A and 7C is not limited to the order illustrated in the drawings.

As illustrated in FIG. 7A, when the light source 13 includes six linear light sources, a region R where all the sine waves of the color luminances are formed has a width of 1.33 periods, expressed in terms of the sine wave period.

The width of one period refers to a width of one cycle of the sine wave of the luminance of light included in the illumination pattern formed on the object 2. The width refers to, for example, a range from the peak of the luminance of blue to the adjacent peak of blue in FIG. 7B.

As illustrated in FIG. 7C when the light source 13a includes seven linear light sources, a region R where all the sine waves of the color luminances are formed has a width of 1.67 periods, expressed in terms of the sine wave period.

To reduce the variation in the measurement of the object 2 and increase the measurement accuracy, it is preferable that the width w of the opening 17 does not include a region other than the region R in which all the sine waves of the color luminances are formed. According to the present invention as defined in appended claim 1, when m denotes the width of one period of the sinusoidal wave of the luminance of light included in the illumination pattern formed on the object 2, n denotes the number of linear light sources 13a included in the light source 13, and w denotes the width of the opening 17, w is greater than m and is less than or equal to (n - 2)/3 (m < w ≤ (n - 2)/3). Note that m is a natural number, and n is a natural number greater than or equal to 3.

Calculating phase information performed by a defect detection unit 24 involves image information containing k periods of a sine wave, where k is a natural number. The width w of the opening 17, located at the side of the second diffuser plate 15 that is closer to the object 2, is preferably greater than or equal to the width of k periods and less than or equal to the width of {(n - 2)/3} periods.

Specifically, when six linear light sources 13a are arranged in the light source 13 as illustrated in FIG. 7A, the region R where all the sine waves of the color luminances are formed has a width of 1.33 periods, expressed in terms of the sine wave period. The width w of the opening 17 is preferably greater than or equal to the width of one period and less than or equal to the width of 1.33 periods. More preferably, the width w of the opening 17 is greater than or equal to the width of 1.1 periods and less than or equal to the width of 1.2 periods. This ensures that the opening 17 is less susceptible to installation errors of the length corresponding to the width of 0.1 periods.

Further, when seven linear light sources 13a are arranged in the light source 13 as illustrated in FIG. 7C, the region R where all the sine waves of the color luminances are formed has a width of 1.67 periods, expressed in terms of the sine wave period. The width w of the opening 17 is preferably greater than or equal to the width of one period and less than or equal to the width of 1.67 periods. More preferably, the width w of the opening 17 is greater than or equal to the width of 1.1 periods and less than or equal to the width of 1.5 periods. This ensures that the opening 17 is less susceptible to installation errors of the length corresponding to the width of 0.1 periods.

For example, when nine linear light sources 13a are arranged in the light source 13, the region R where all the sine waves of the color luminances are formed has a width of 2.33 periods, expressed in terms of the sine wave period. The width w of the opening 17 is preferably greater than or equal to the width of two periods and less than or equal to the width of 2.33 periods. More preferably, the width w of the opening 17 is greater than or equal to the width of 1.2 periods and less than or equal to the width of 2.2 periods. This ensures that the opening 17 is less susceptible to installation errors of the length corresponding to the width of 0.1 periods.

Thus, if the light source 13 includes n linear light sources 13a, n = 3(m + 1) or n = 3(m + 1) + 1. In this case, when m denotes the width of one period of the sinusoidal wave of the luminance of light included in the illumination pattern formed on the object 2, n denotes the number of linear light sources 13a included in the light source 13, w denotes the width of the opening 17, n is equal to 3(m + 1) or n is equal to 3(m + 1) + 1, w is greater than m + 0.1 and is less than or equal to m + 0.2 (m + 0.1 < w ≤ m + 0.2). Note that m is a natural number, and n is a natural number greater than or equal to 3.

The number of linear light sources 13a included in the light source is preferably minimized from a cost perspective. For calculating the phase information performed by the defect detection unit 24, it is sufficient to have image information including one period of the sinusoidal wave. In this case, the number of linear light sources 13a is six. Two sets of the green linear light sources 13G are arranged in the array direction Fa.

The linear light sources include two sets of linear light sources arranged in the array direction (Fa). The multiple point light sources include multiple different types of point light sources emitting light beams with different wavelengths, and each set of linear light sources includes the multiple different types of point light sources arranged in a predetermined order.

Further, when the installation errors of the length corresponding to the width of 0.1 periods in the opening 17 is not considered, the width w of the opening 17 located at the side of the second diffuser plate 15 that is closer to the object 2 can be set to a width corresponding to k periods. In this case, when the number of the linear light sources 13a is n (= 3 (m + 1) - 1), m can be set to (n - 2)/3.

In other words, when m denotes the width of one period of the sinusoidal wave of the luminance of light included in the illumination pattern formed on the object 2, n denotes the number of linear light sources 13a included in the light source 13, w denotes the width of the opening 17, n is equal to 3(m + 1) - 1, w, which is the width of the opening 17, is equal to m (w = m). Note that m is a natural number, and n is a natural number greater than or equal to 3.

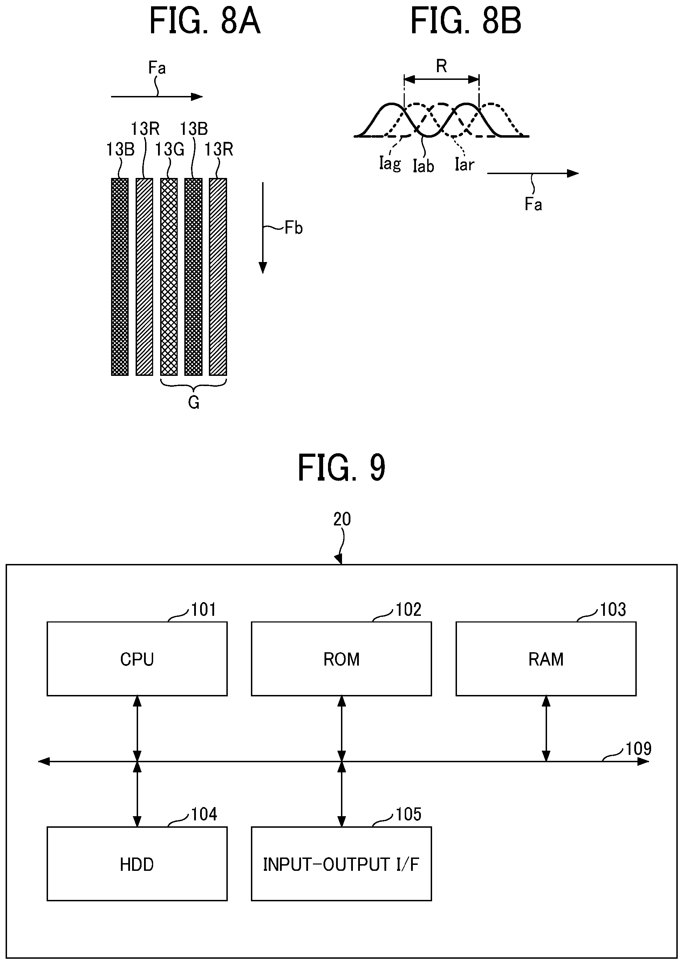

FIGS. 8A and 8B are diagrams each illustrating a width w of an opening 17 located at the side of a second diffuser plate 15 that is closer to the object 2. In FIGS. 8A and 8B, unlike the case of FIGS. 7A, 7B, 7C, and 7D, the light source 13 includes only one green linear light source 13G, and two red linear light sources 13R and two blue linear light sources 13B.

As illustrated in FIGS. 8A and 8B, when the light source 13 includes five linear light sources 13a, a region R where all the sine waves of the color luminances are formed has a width of one period, expressed in terms of the sine wave period. The width of the opening 17 corresponds to the width of one set of the green linear light source 13G in the array direction Fa. Calculating the phase information performed by the defect detection unit 24 involves five linear light sources 13a, which is the minimum number needed.

The linear light sources include five linear light sources. The opening 17 has a width corresponding to a width of one set of linear light source, the multiple point light sources including multiple different types of point light sources emitting light beams with different wavelengths. Each set of linear light sources includes the multiple different types of point light sources arranged in a predetermined order.

### Hardware Configuration of Controller 20

FIG. 9 is a block diagram of a hardware configuration of a controller 20 of a measuring apparatus 1. The controller 20 includes a central processing unit (CPU) 101, a read only memory (ROM) 102, a random access memory (RAM) 103, a hard disk drive (HDD) 104, and an input-output interface (I/F) 105. These components are electrically connected to one another via a bus 109.

The CPU 101 controls the operation of the controller 20. The ROM 102 stores a program executed in the CPU 101. The RAM 103 is used as a work area in which the CPU 101 executes a program. The HDD 104 stores various kinds of information such as programs. The input-output I/F 105 is an interface for inputting and outputting various signals and date to and from an external device.

Part or all of the functions of the CPU 101 may be implemented by an electronic circuit, such as an application specific integrated circuit (ASIC) or a field-programmable gate array (FPGA).

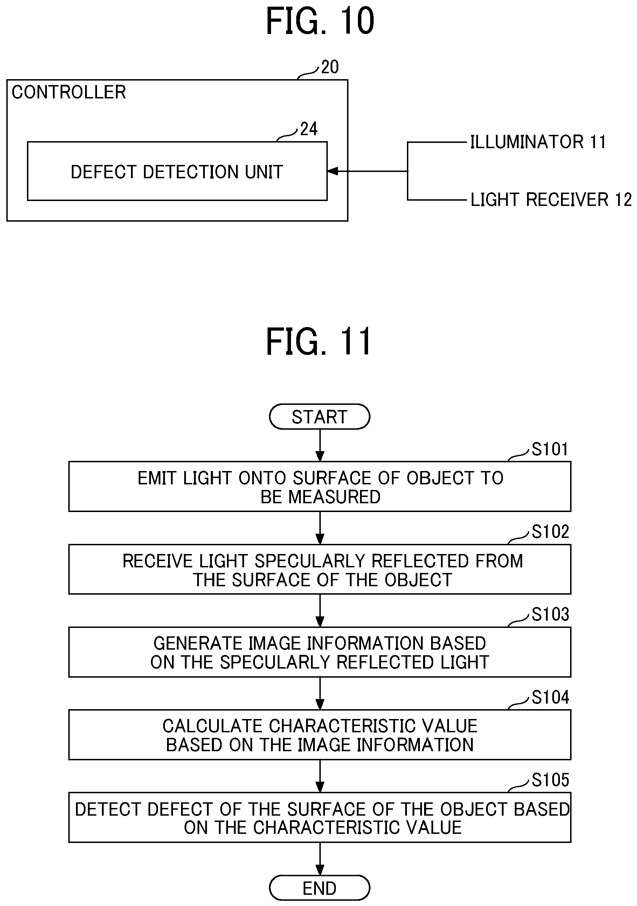

FIG. 10 is a block diagram of a functional configuration of a controller 20 of a measuring apparatus 1. The controller 20 includes a defect detection unit 24. The controller 20 controls the timing of the operation of the illuminator 11 and the light receiver 12.

The defect detection unit 24 measures the state of the object 2 based on the specular reflection light from the object 2 received by the light receiver 12, and detects any defect of the surface of the object 2, by comparing the light received from the object 2 with predetermined value(s). More specifically, the defect detection unit 24 generates image information based on the specular reflection light from the object 2 received by the light receiver 12, calculates a characteristic value based on the generated image information, and measures the object 2 according to the calculated characteristic value.

More specifically, the defect detection unit 24 generates image information based on the specular reflection light from the object 2 received by the light receiver 12, and calculates phase information based on the distribution of the luminance of light included in the image information. The defect detection unit 24 calculates a characteristic value based on at least the phase information, and detects a defect by measuring the object 2 according to the characteristic value. The defect detection unit 24 may calculate one or more characteristic values based on a predetermined algorithm. The defect detection unit 24 may calculate the characteristic value based on the luminance information, the phase information, the color information, and information obtained by combining these pieces of information. The characteristic value is, for example, the magnitude of the peak value of the signal level in the region that is the defect candidate, the amount of change in the slope of the signal, or the area of the region.

The defect detection unit 24 detects a defect based on the calculated characteristic value and a defect determination criterion. The defect detection unit 24 detects a defect using a defect inspection algorithm based on the characteristic value, the state of the object 2, and inspection criteria set for each of various defect types.

### Measuring Method

FIG. 11 is a flowchart for explaining a measuring method. The measuring method is performed by a measuring apparatus 1.

An illuminator 11 of the measuring apparatus 1 emits light onto an object 2 to be measured in step S101. Subsequently, a light receiver 12 of the measuring apparatus 1 receives light specularly reflected from the surface of the specular reflection light from the object 2 to which the illuminator 11 emits light in step S102.

The defect detection unit 24 generates image information based on the light specularly reflected from the object 2 and received by the light receiver 12 in step S103. When multiple light receiver 12 are used, image information from multiple regions of the object 2 may be generated.

The defect detection unit 24 calculates a characteristic value based on the generated image information in step S104. The defect detection unit 24 detects a defect of the object 2 according to the calculated characteristic value in step S105. Upon detecting a defect of the object 2, step 105 can also include outputting a corrective action to correct the defect on the object 2 (e.g., a correction step, such as repainting the object 2 and/or repairing the defect on/in the object 2). Repairing can involve any known paint repair technique, such as wet sanding, polishing, removing the defective paint and/or applying an additional layer of paint/clear-coat, and the like.

The measuring method involves the above-described steps. However, the measuring method may involve an additional step depending on factors such as the measurement conditions and environments.

### Processing performed by the defect detection unit 24

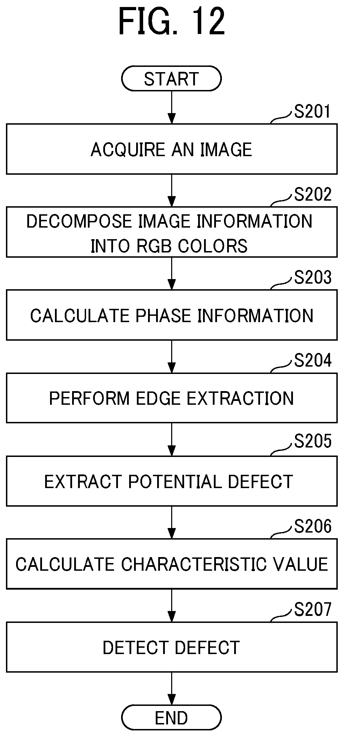

FIG. 12 is a flowchart of a process for detecting defects performed by a defect detection unit 24 of a measuring apparatus 1. In the present disclosure, a light source 13 uses three colors of red, green, and blue.

The process performed by the defect detection unit 24 can be roughly divided into two: preprocessing for emphasizing a defect of the object 2 and post-processing for detecting a defect based on an image obtained by the preprocessing. In FIG. 12, the preprocessing refers to steps S201 to S205, and the post-processing refers to steps S206 to S207.

The light receiver 12 receives light specularly reflected from the object 2 and acquires image information in step S201. At this time, the light receiver 12 may store the acquired image information in an HDD 104 of the measuring apparatus 1.

The defect detection unit 24 decomposes the image information of the object 2, acquired in step S201, into RGB colors in step S202. Specifically, an R signal indicating red, a G signal indicating green, and a B signal indicating blue are extracted from the image information. The spectral sensitivity curve of the light receiver 12 has overlaps between the R, G, and B signals, so the signals of each color, when the colors are simply decomposed, contain crosstalk. The defect detection unit 24 performs crosstalk correction (i.e., correction of unwanted interference) to extract the R signal, the G signal, and the B signal without crosstalk.

The defect detection unit 24 calculates phase information based on the image information acquired in step S201, in step S203. Specifically, the defect detection unit 24 performs a smoothing process on each signal of RGB colors decomposed in step S202, based on the luminance distribution of the light included in the image information. The smoothing process uses a standard averaging filter or a bilateral filter that preserves edges. Then, the defect detection unit 24 calculates phase information by performing phase shift calculations using the smoothed signals. As a result, a two-dimensional phase image is acquired. To calculate phase information by performing the phase shift calculations by the defect detection unit 24, it is preferable that the luminance distribution of each light matches a sinusoidal pattern, although a luminance distribution of light close to a sinusoidal pattern is also acceptable.

The defect detection unit 24 performs edge extraction based on the phase image calculated in step S203, in step S204. Edge extraction is a fundamental technique in image processing that aims to identify and locate boundaries or significant changes in image intensity. These boundaries, or edges, often correspond to important features like object outlines, corners, and textures. Specifically, the defect detection unit 24 performs edge extraction on the two-dimensional phase image, using known filters such as differential filters, including the Sobel filters, and second-order differential filters, including Laplacian filters and Laplacian of Gaussian (LoG) filters.

The preprocessing performed in steps S201 to S205 by the defect detection unit 24 generates a two-dimensional defect-enhanced image where the defect of the object 2 is highlighted. The defect detection unit 24 detects a defect based on the defect-enhanced image in the following post-processing. The defect-enhanced image is derived from the phase information, and at least one characteristic value is calculated based on the phase information.

The defect detection unit 24 extracts a potential defect region from the two-dimensional defect-enhanced image in step S205. The extraction process combines methods, such as a binarization process and a contraction/expansion process to extracts a potential defect region. At this time, the defect detection unit 24 may compare regions with a defect-free standard region to extract a potential defect region.

The defect detection unit 24 calculates a characteristic value based on at least phase information for a potential defect region on the object 2 in step S206. The defect detection unit 24 may calculate one or more characteristic values based on a predetermined algorithm. The defect detection unit 24 may calculate the characteristic value based on the luminance information, the phase information, the color information, and information obtained by combining these pieces of information. The characteristic value may include the magnitude of a signal level (e.g., a peak value), the amount of signal change (e.g., slope), or the area of a potential defect region.

The defect detection unit 24 detects a defect of the object 2 according to the characteristic value calculated in step S206, in step S207. In the detection process, the defect detection unit 24 may determine the presence or absence of a defect by comparing the characteristic value with the defect determination criteria. The characteristic value can be calculated using, for example, the magnitude of the peak value of the signal level in the region that is the defect candidate, the amount of change in the slope of the signal, or the area of the potential defect region. Additionally, step S207 can also include can also include outputting a corrective action to correct the defect on the object 2 (e.g., a correction step, such as repainting the object 2 and/or repairing the defect on/in the object 2). Repairing can involve any known paint repair technique, such as wet sanding, polishing, removing the defective paint and/or applying an additional layer of paint/clear-coat, and the like).

The defect detection unit 20 generates image information based on the light specularly reflected from the object, received by the light receiver 12; calculates phase information based on the image information; detects a defect of the object based on the phase information; and outputs a corrective action to be performed on the object to correct the defect.

The measuring method includes generating image information based on the light specularly reflected from the object, received by the light receive; calculating phase information based on the image information; detecting a defect of the object based on the phase information; and performing a correction of the defect on the object.

The number of characteristic values is not limited to one. The defect detection unit 24 calculates multiple characteristic values, and compares the characteristic values with defect determination criteria, and comprehensively detect defects.

The characteristic value can be calculated from image information acquired by the light receiver 12 or from luminance based on decomposed RGB colors. The characteristic value can also be calculated from a combination of these pieces of information and phase information. For example, the defect detection unit 24 may calculate characteristic values based on phase information and characteristic values based on luminance to detect defects. Since there are many kinds of defects, each defect needs a characteristic value for its specific properties.

### Advantageous Effects

In the measuring apparatus 1, the first diffuser plate 14 is placed between the light source 13 and the object 2, and the second diffuser plate 15 is placed between the first diffuser plate 14 and the object 2. The light shield portion 16 located at the side of the second diffuser plate 15 that is closer to the object 2 restricts the irradiation range of illumination light reaching the object 2 by allowing the illumination light from the light source 13 to pass through only the opening 17.

This configuration allows the light shield portion 16 to block the uneven regions of the wavy illumination pattern formed at both ends of the illumination light in the array direction Fa. As a result, an illumination pattern of a uniform stripe pattern, combining a sinusoidal variation in light intensity (or luminance of the light emitted from the light source 13) along the specified array direction with alternating bright and dark regions is formed on the object 2.

As a result, the measuring apparatus 1 can reduce the variation in the measurement of the object 2. Further, the measuring apparatus 1 can enhance the measurement accuracy.

The embodiments have been described above; however, the present disclosure is not limited to the above-described embodiments and can be modified and improved in various ways within the scope of the appended claims.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention as defined by the appended claims.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A measuring apparatus comprising:
an illuminator (11) including a light source (13) to emit light onto an object (2) being conveyed in a conveyance direction;
a first diffuser plate (14);
a second diffuser plate (15) between the first diffuser plate (14) and the object;
a light shield portion (16) between the second diffuser plate (15) and the object, the light shield portion having an opening (17) that includes an optical axis of light emitted from the light source and reaching the second diffuser plate (15); and
a light receiver (12) to receive light specularly reflected from the object illuminated by the illuminator (11),
wherein the light source (13) includes multiple point light sources (13r, 13g, 13b) arranged in a predetermined order along:
an array direction (Fa); and
an orthogonal direction (Fb) orthogonal to the array direction (Fa), to form multiple linear light sources, and
wherein the multiple linear light sources form an illumination pattern of a uniform stripe pattern including sinusoidal variation in luminance of the light along the array direction (Fa),
**characterized in that**
a conditional expression is satisfied: $m < w \leq \left(n-2\right) / 3$ where
m denotes a width of one period of a sinusoidal wave of the luminance of the light in the illumination pattern formed on the object and is a natural number,
n denotes the number of linear light sources in the light source and is a natural number greater than or equal to 3, and
w denotes a width of the opening (17) in the array direction (Fa).

2. The measuring apparatus according to claim 1, wherein
the multiple point light sources (13r, 13g, 13b) emit light beams having different wavelengths.

3. The measuring apparatus according to claim 1 or 2, wherein
the first diffuser plate (14) is positioned between the light source (13) and the object (2).

4. The measuring apparatus according to any one of claims 1 to 3, wherein
the light shield portion (16) is integral with the second diffuser plate (15).

5. The measuring apparatus according to any one of claims claim 1 to 4, wherein:
the multiple linear light sources include:
red linear light sources (13R) including red point light sources (13r) arranged in a predetermined order along the array direction (Fa) and the orthogonal direction (Fb);
green linear light sources (13G) including green point light sources (13g) arranged in a predetermined order along the array direction (Fa) and the orthogonal direction (Fb); and
blue linear light sources (13B) including blue point light sources (13b) arranged in a predetermined order along the array direction (Fa) and the orthogonal direction (Fb),
the multiple linear light sources are arranged, in the array direction, as a set including the red linear light sources, the green linear light sources and the blue linear light sources arranged in a predetermined order.

6. The measuring apparatus according to any one of claims 1 to 5, wherein:
when n is equal to 3(m +1) or 3(m + 1) + 1, a conditional expression is satisfied: $m + 0.1 < w \leq m + 0.2$
where
m denotes the width of one period of the sinusoidal wave of the luminance of light in the illumination pattern formed on the object and is a natural number,
n denotes the number of linear light sources in the light source and is a natural number greater than or equal to 3, and
w denotes the width of the opening.

7. The measuring apparatus according to any one of claims 1 to 6, wherein
the linear light sources include two sets of linear light sources arranged in the array direction (Fa),
the multiple point light sources include different types of point light sources emitting light beams with different wavelengths, and
each set of linear light sources includes the different types of point light sources arranged in a predetermined order.

8. The measuring apparatus according to any one of claims claim 1 to 7, further comprising a defect detection unit (20) configured to:
generate image information based on the light specularly reflected from the object, received by the light receiver (12);
calculate phase information based on the image information;
detect a defect of the object based on the phase information; and
output a corrective action to be performed on the object to correct the defect.

9. A measuring method using the measuring apparatus according to any one of claims 1 to 8, the method comprising:
emitting light, by a light source, including multiple colors onto an object to be measured (S101); and
receiving light specularly reflected from the object (S102)
wherein the light is emitted from the light source, through a first diffuser plate, then through a second diffuser plate, then through an opening of a light shield portion and then to onto the object, and from the object to a light receiver, and
the opening includes an optical axis of light emitted from the light source and reaching the second diffuser plate.

10. The measuring method according to claim 9, wherein
the light source includes multiple point light sources, and
the multiple point light sources emit light beams having different wavelengths.

11. The measuring method according to claim 9 or 10, further comprising:
generating image information based on the light specularly reflected from the object, received by the light receive;
calculating phase information based on the image information;
detecting a defect of the object based on the phase information; and
performing a correction of the defect on the object.

## Patentansprüche

1. Messvorrichtung, umfassend:
eine Beleuchtungseinrichtung (11), umfassend eine Lichtquelle (13) zum Emittieren von Licht auf ein Objekt (2), das in einer Förderrichtung befördert wird;
eine erste Diffusorplatte (14);
eine zweite Diffusorplatte (15) zwischen der ersten Diffusorplatte (14) und dem Objekt;
einen Lichtabschirmabschnitt (16) zwischen der zweiten Diffusorplatte (15) und dem Objekt, wobei der Lichtabschirmabschnitt eine Öffnung (17) aufweist, die eine optische Achse des von der Lichtquelle emittierten und die zweite Diffusorplatte (15) erreichenden Lichts umfasst; und
einen Lichtempfänger (12) zum Empfangen von Licht, das von dem durch die Beleuchtungseinrichtung (11) beleuchteten Objekt spiegelnd reflektiert wird,
wobei die Lichtquelle (13) mehrere Punktlichtquellen (13r, 13g, 13b) umfasst, die in einer vorbestimmten Reihenfolge entlang:
einer Anordnungsrichtung (Fa); und
einer orthogonalen Richtung (Fb), die orthogonal zu der Anordnungsrichtung (Fa) ist, angeordnet sind, um mehrere lineare Lichtquellen zu bilden, und
wobei die mehreren linearen Lichtquellen ein Beleuchtungsmuster eines gleichmäßigen Streifenmusters bilden, das eine sinusförmige Variation der Leuchtdichte des Lichts entlang der Anordnungsrichtung (Fa) umfasst,
**dadurch gekennzeichnet, dass**
ein Bedingungsausdruck erfüllt ist: $m < w \leq \left(n-2\right) / 3$ wobei
m eine Breite einer Periode einer Sinuswelle der Leuchtdichte des Lichts in dem auf dem Objekt gebildeten Beleuchtungsmuster bezeichnet und eine natürliche Zahl ist,
n die Anzahl der linearen Lichtquellen in der Lichtquelle bezeichnet und eine natürliche Zahl größer als oder gleich 3 ist, und
w eine Breite der Öffnung (17) in der Anordnungsrichtung (Fa) bezeichnet.

2. Messvorrichtung nach Anspruch 1, wobei
die mehreren Punktlichtquellen (13r, 13g, 13b) Lichtstrahlen mit unterschiedlichen Wellenlängen emittieren.

3. Messvorrichtung nach Anspruch 1 oder 2, wobei
die erste Diffusorplatte (14) zwischen der Lichtquelle (13) und dem Objekt (2) positioniert ist.

4. Messvorrichtung nach einem der Ansprüche 1 bis 3, wobei
der Lichtabschirmabschnitt (16) einstückig mit der zweiten Diffusorplatte (15) ausgebildet ist.

5. Messvorrichtung nach einem der Ansprüche 1 bis 4, wobei:
die mehreren linearen Lichtquellen umfassen:
rote lineare Lichtquellen (13R), umfassend rote Punktlichtquellen (13r), die in einer vorbestimmten Reihenfolge entlang der Anordnungsrichtung (Fa) und der orthogonalen Richtung (Fb) angeordnet sind;
grüne lineare Lichtquellen (13G), umfassend grüne Punktlichtquellen (13g), die in einer vorbestimmten Reihenfolge entlang der Anordnungsrichtung (Fa) und der orthogonalen Richtung (Fb) angeordnet sind; und
blaue lineare Lichtquellen (13B), umfassend blaue Punktlichtquellen (13b), die in einer vorbestimmten Reihenfolge entlang der Anordnungsrichtung (Fa) und der orthogonalen Richtung (Fb) angeordnet sind,
die mehreren linearen Lichtquellen in der Anordnungsrichtung als eine Gruppe angeordnet sind, die die roten linearen Lichtquellen, die grünen linearen Lichtquellen und die blauen linearen Lichtquellen umfasst, die in einer vorbestimmten Reihenfolge angeordnet sind.

6. Messvorrichtung nach einem der Ansprüche 1 bis 5, wobei:
wenn n gleich 3(m + 1) oder 3(m + 1) + 1 ist, ein Bedingungsausdruck erfüllt ist: $m + 0,1 < w \leq m + 0,2$
wobei
m die Breite einer Periode der Sinuswelle der Leuchtdichte des Lichts in dem auf dem Objekt gebildeten Beleuchtungsmuster bezeichnet und eine natürliche Zahl ist,
n die Anzahl der linearen Lichtquellen in der Lichtquelle bezeichnet und eine natürliche Zahl größer als oder gleich 3 ist, und
w die Breite der Öffnung bezeichnet.

7. Messvorrichtung nach einem der Ansprüche 1 bis 6, wobei
die linearen Lichtquellen zwei Gruppen von linearen Lichtquellen umfassen, die in der Anordnungsrichtung (Fa) angeordnet sind,
die mehreren Punktlichtquellen unterschiedliche Typen von Punktlichtquellen umfassen, die Lichtstrahlen mit unterschiedlichen Wellenlängen emittieren, und
jede Gruppe von linearen Lichtquellen die unterschiedlichen Typen von Punktlichtquellen umfasst, die in einer vorbestimmten Reihenfolge angeordnet sind.

8. Messvorrichtung nach einem der Ansprüche 1 bis 7, ferner umfassend eine Defekterfassungseinheit (20), die dazu eingerichtet ist:
Bildinformationen basierend auf dem von dem Objekt spiegelnd reflektierten und von dem Lichtempfänger (12) empfangenen Licht zu erzeugen;
Phaseninformationen basierend auf den Bildinformationen zu berechnen;
einen Defekt des Objekts basierend auf den Phaseninformationen zu erfassen; und
eine an dem Objekt durchzuführende Korrekturmaßnahme auszugeben, um den Defekt zu korrigieren.

9. Messverfahren unter Verwendung der Messvorrichtung nach einem der Ansprüche 1 bis 8, wobei das Verfahren umfasst:
Emittieren von Licht, das mehrere Farben umfasst, durch eine Lichtquelle auf ein zu messendes Objekt (S101); und
Empfangen von von dem Objekt spiegelnd reflektiertem Licht (S102),
wobei das Licht von der Lichtquelle durch eine erste Diffusorplatte, anschließend durch eine zweite Diffusorplatte, anschließend durch eine Öffnung eines Lichtabschirmabschnitts und anschließend auf das Objekt und von dem Objekt zu einem Lichtempfänger emittiert wird, und
die Öffnung eine optische Achse des von der Lichtquelle emittierten und die zweite Diffusorplatte erreichenden Lichts umfasst.

10. Messverfahren nach Anspruch 9, wobei
die Lichtquelle mehrere Punktlichtquellen umfasst, und
die mehreren Punktlichtquellen Lichtstrahlen mit unterschiedlichen Wellenlängen emittieren.

11. Messverfahren nach Anspruch 9 oder 10, ferner umfassend:
Erzeugen von Bildinformationen basierend auf dem von dem Objekt spiegelnd reflektierten und von dem Lichtempfänger empfangenen Licht;
Berechnen von Phaseninformationen basierend auf den Bildinformationen;
Erfassen eines Defekts des Objekts basierend auf den Phaseninformationen; und
Durchführen einer Korrektur des Defekts an dem Objekt.

## Revendications

1. Dispositif de mesure comprenant :
un organe d'éclairage (11) comprenant une source de lumière (13) destinée à émettre de la lumière sur un objet (2) transporté dans une direction de transport,
une première plaque de diffusion (14),
une deuxième plaque de diffusion (15) située entre la première plaque de diffusion (14) et l'objet,
une portion pare-lumière (16) située entre la deuxième plaque de diffusion (15) et l'objet, la portion pare-lumière présentant une ouverture (17) qui comporte un axe optique de la lumière émise par la source de lumière et atteignant la deuxième plaque de diffusion (15), et
un récepteur de lumière (12) destiné à recevoir la lumière réfléchie de manière spéculaire par l'objet éclairé par l'organe d'éclairage (11) ;
la source de lumière (13) comprenant de multiples sources de lumière ponctuelles (13r, 13g, 13b) agencées dans un ordre prédéterminé le long :
d'une direction de réseau (Fa), et
d'une direction orthogonale (Fb) perpendiculaire à la direction de réseau (Fa), afin de former de multiples sources de lumière linéaires, et
les multiples sources de lumière linéaires formant un motif d'éclairage sous la forme d'un motif à bandes uniformes présentant une variation sinusoïdale de la luminance de la lumière le long de la direction de réseau (Fa),
**caractérisé en ce que**
une expression conditionnelle est satisfaite : $m < w \leq \left(n-2\right) / 3$ où
m désigne la largeur d'une période d'une onde sinusoïdale de la luminance de la lumière dans le motif d'éclairage formé sur l'objet et est un nombre naturel,
n désigne le nombre de sources de lumière linéaires dans la source de lumière et est un nombre naturel supérieur ou égal à 3, et
w désigne la largeur de l'ouverture (17) dans la direction de réseau (Fa).

2. Dispositif de mesure la revendication 1, dans lequel
les multiples sources de lumière ponctuelles (13r, 13g, 13b) émettent des faisceaux lumineux présentant des longueurs d'onde différentes.

3. Dispositif de mesure selon la revendication 1 ou 2, dans lequel
la première plaque de diffusion (14) est positionnée entre la source de lumière (13) et l'objet (2).

4. Dispositif de mesure selon l'une quelconque des revendications 1 à 3, dans lequel :
la portion pare-lumière (16) fait partie intégrante de la deuxième plaque de diffusion (15).

5. Dispositif de mesure selon l'une quelconque des revendications 1 à 4, dans lequel :
les multiples sources de lumière linéaires comprennent :
des sources de lumière linéaires rouges (13R) comprenant des sources de lumière ponctuelles rouges (13r) agencées dans un ordre prédéterminé le long de la direction de réseau (Fa) et de la direction orthogonale (Fb),
des sources de lumière linéaires vertes (13G) comprenant des sources de lumière ponctuelles vertes (13g) agencées dans un ordre prédéterminé le long de la direction de réseau (Fa) et de la direction orthogonale (Fb), et
des sources de lumière linéaires bleues (13B) comprenant des sources de lumière ponctuelles bleues (13b) agencées dans un ordre prédéterminé le long de la direction de réseau (Fa) et de la direction orthogonale (Fb),
les multiples sources de lumière linéaires sont agencées, dans la direction de réseau, sous la forme d'un ensemble comprenant les sources de lumière linéaires rouges, les sources de lumière linéaires vertes et les sources de lumière linéaires bleues agencées selon un ordre prédéterminé.

6. Dispositif de mesure selon l'une quelconque des revendications 1 à 5, dans lequel :
lorsque n est égal à 3(m + 1) ou à 3(m + 1) + 1, une expression conditionnelle est satisfaite : $m + 0 , 1 < w \leq m + 0 , 2$
où
m désigne la largeur d'une période de l'onde sinusoïdale de la luminance de lumière dans le motif d'éclairage formé sur l'objet et est un nombre naturel,
n désigne le nombre de sources de lumière linéaires dans la source de lumière et est un nombre naturel supérieur ou égal à 3, et
w désigne la largeur de l'ouverture.

7. Dispositif de mesure selon l'une quelconque des revendications 1 à 6, dans lequel :
les sources de lumière linéaires comprennent deux ensembles de sources de lumière linéaires agencés dans la direction de réseau (Fa),
les multiples sources de lumière ponctuelles comprennent différents types de sources de lumière ponctuelles émettant des faisceaux de lumière de différentes longueurs d'onde, et
chaque ensemble de sources de lumière linéaires comprend les différents types de sources de lumière ponctuelles agencés dans un ordre prédéterminé.

8. Dispositif de mesure selon l'une quelconque des revendications 1 à 7, comprenant en outre une unité de détection de défaut (20) conçue pour :
générer des informations d'image en fonction de la lumière réfléchie de manière spéculaire par l'objet et reçue par le récepteur de lumière (12),
calculer des informations de phase en fonction des informations d'image,
détecter un défaut de l'objet en fonction des informations de phase, et
générer une action corrective à réaliser sur l'objet afin de corriger le défaut.

9. Procédé de mesure mettant en œuvre le dispositif de mesure selon l'une quelconque des revendications 1 à 8, le procédé comprenant :
l'émission de lumière, par une source de lumière, comprenant de multiples couleurs sur un objet à mesurer (S101), et
la réception de la lumière réfléchie de manière spéculaire par l'objet (S102) ;
la lumière étant émise par la source de lumière, traversant une première plaque de diffusion, une deuxième plaque de diffusion, puis une ouverture d'une portion pare-lumière, avant d'atteindre l'objet, puis étant renvoyée par l'objet vers un récepteur de lumière, et
l'ouverture comportant un axe optique de la lumière émise par la source de lumière et atteignant la deuxième plaque de diffusion.

10. Procédé de mesure la revendication 9, dans lequel
la source de lumière comprend de multiples sources de lumière ponctuelles, et
les multiples sources de lumière ponctuelles émettent des faisceaux lumineux présentant des longueurs d'onde différentes.

11. Procédé de mesure selon la revendication 9 ou 10, comprenant en outre :
la génération d'informations d'image en fonction de la lumière réfléchie de manière spéculaire par l'objet et reçue par le récepteur de lumière,
le calcul d'informations de phase en fonction des informations d'image,
la détection d'un défaut de l'objet en fonction des informations de phase, et
la réalisation d'une correction du défaut sur l'objet.
